# EUROPEAN PATENT APPLICATION

(11) **EP 1 544 527 A1**
(43) Date of publication of application: **22.06.2005**
(21) Application number: 04425884.6
(22) Date of filing: 25.11.2004
(51) Int. Cl.: F16L 3/10

(54) **Collar device for the wall mounting of pipes**

(30) Priority: 17.12.2003 IT MI20032494
(71) Applicant: Raccorderie Metalliche S.p.A., 46010 Campitello di Marcaria, Mantova (IT)
(72) Inventor: Beccari, Maurizio, 46100 Mantova MN (IT)
(74) Representative: Concone, Emanuele

(57) **Abstract**

A collar device for the wall mounting of pipes and the like consists of two half-collars with a semi-circular profile (1, 1'), of which a first profile (1) is centrally provided with a hole (2) flared outwards whereas a second profile (1') has no hole, and at the ends of said profiles (1, 1') there are provided coupling elements consisting at a first end of the semi-circular profile (1, 1') of a first flat segment (3) and at the other end of a similar flat segment (3') that continues in a subsequent segment (5) bent 180° inward, so as to form between said segments (3', 5) a U-shaped seat arranged in the same plane of the first flat segment (3) and suitable to receive the latter. In this way the possibility is achieved of a partial mounting of the pipe (T) thanks to the initial manual locking of the device by relative longitudinal sliding of the two half-collars, so that the position of the pipe (T) can be precisely adjusted though assuring a secure support even before the complete locking. Furthermore, the manufacturing process is simplified with respect to prior art collars, since no welding nor threading step is required but only a simple forging of both half-collars by means of a single die.

## Description

The present invention relates to devices for the wall mounting of pipes and the like, and in particular to a quick-lock collar device in two parts.

It is known that these types of small-size and quick-lock collars allow to optimize the pipe mounting time, offering a greater saving in manufacturing and providing optimal installation at the end user thanks to the small number of components required for mounting. The market presently offers two different types of collar device, which however have some drawbacks both in manufacturing and in mounting.

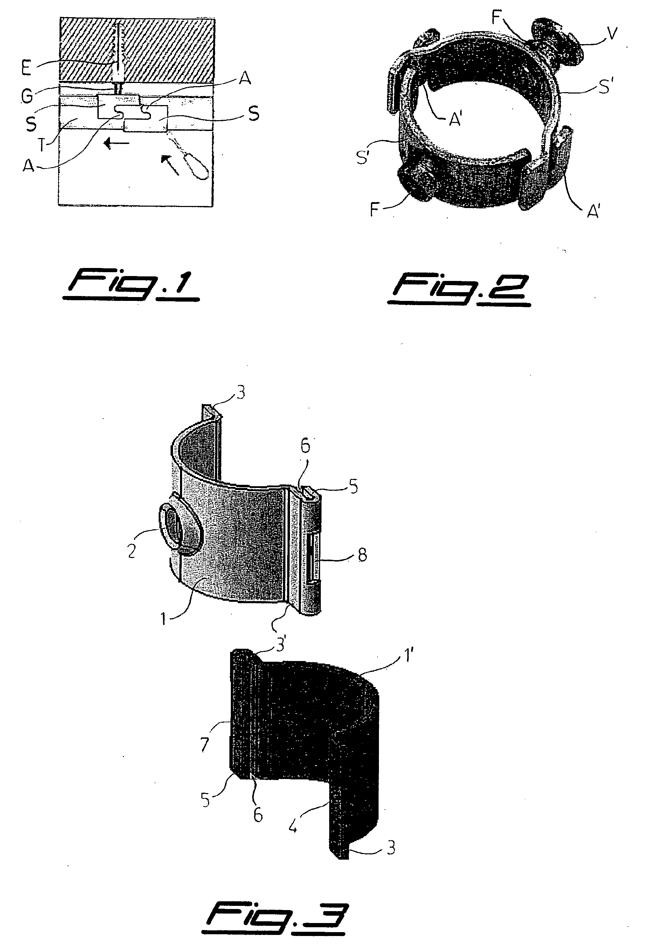

A first type of known collar device, diagrammatically illustrated in fig.1, consists of two half-collars S having the same shape one of which is provided on the outside with an electro-welded threaded shank G for the wall mounting by means of a common expansion plug E. In this known collar there is provided a male/female shaping A of the two half-collars S, resulting in a joint that allows the mounting of pipe T through a longitudinal shifting. However, this shifting is difficult both at the moment of closing the collar around pipe T and at the moment of unlocking the collar, due to the small thickness of the collar and to the particular joint contour of shaping A.

Another drawback of functional nature stems from the fact that the half-collar provided with the threaded shank is not easily mounted on the wall, since a screwing tool can not be used and the position of maximum screwing usually does not correspond to the desired orientation of the device. Moreover, this type of device does not allow a partial manual mounting of the pipe (e.g. to check alignment with other pipes), since a partial locking of the device without tools is not possible.

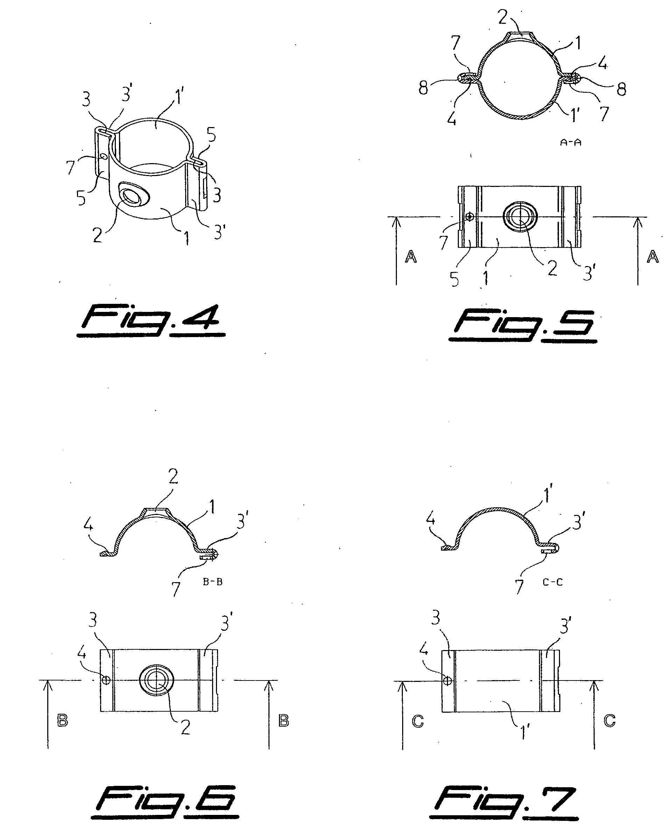

A second type of known collar device, illustrated in fig.2, similarly consists of two half-collars S' having the same shape provided with a central flared and threaded hole F, through one of which a screw for the wall mounting by means of an expansion plug is introduced from the inside. Also in this second known collar there is provided a male/female shaping A' of the two half-collars S', however said shaping A' does not achieve a joint whereby the locking of the tube is obtained by means of a locking screw V irremovably introduced in the other hole F.

As a consequence, also this type of collar does not allow a partial manual mounting of the pipe, which moreover risks to be damaged if screw V is tightened too much. Furthermore, the manufacturing of the device is more complicated in that it provides two threaded and flared holes F in the two half-collars S', as well as the working of the tip of screw V to make it irremovable after having introduced it in hole F.

Therefore the object of the present invention is to provide a collar device which overcomes the above-mentioned drawbacks.

This object is achieved by means of a device divided into two half-collars with slide coupling elements suitable to allow an initial manual locking of the collar. Other advantageous features are disclosed in the dependent claims.

A first main advantage of the present collar stems from the possibility of partial mounting of the pipe exactly thanks to the initial manual locking, so that the position of the pipe can be precisely adjusted though assuring a secure support even before the complete locking.

Another significant advantage of this collar results from the simplified manufacturing process, since no welding nor threading step is required but only a simple forging of both half-collars by means of a single die, that can be adapted to the production of a half-collar with or without mounting hole.

These and other advantages and characteristics of the collar device according to the present invention will be clear to those skilled in the art from the following detailed description of an embodiment thereof, with reference to the annexed drawings wherein:
Figs.1 and 2 show the two prior art collars discussed in the introduction;

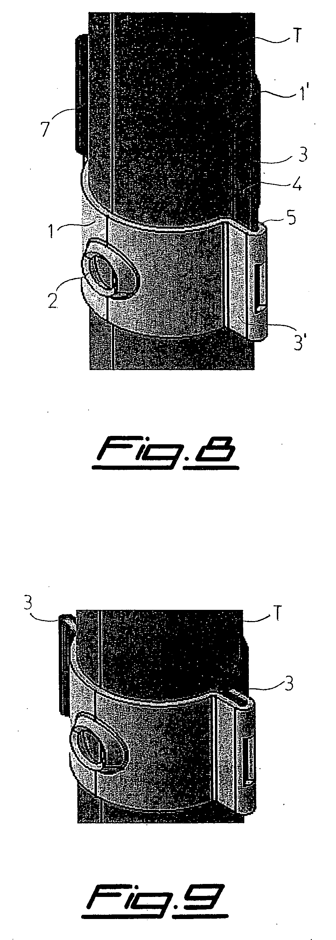

Fig.3 is a perspective view of the present collar in non-assembled state;
Fig.4 is a perspective view of the present collar in a completely locked state;
Fig.5 is a front view, with relevant transverse cross-section, of the locked collar of fig.4;
Fig.6 is a front view, with relevant transverse cross-section, of the half-collar with the hole;
Fig.7 is a front view, with relevant transverse cross-section, of the half-collar without the hole;
Fig.8 is a perspective view of the collar in a state of initial locking with a partially mounted pipe; and
Fig.9 is a perspective view of the collar in a completely locked state with a fully mounted pipe.

Referring to these figures, there is seen that a collar device according to the invention consists of two half-collars with a same central portion 1, 1' of semi-circular profile of which only the first profile 1, intended for the wall mounting, is provided with a central hole 2 flared outwards.

At one end of the semi-circular profile 1, 1' each half-collar terminates with a short flat segment 3, in the center of which there is formed a forged boss 4 projecting outwards (i.e. on the same side of the profile). At the other end the semi-circular profile 1, 1' terminates with a similar flat segment 3' that continues in a subsequent segment 5 bent 180° inward, so as to form a U-shaped seat 6 arranged in the same plane of the end segment 3 and suitable to receive the latter. At the center of segment 5 there is formed a circular hole 7 suitable to house said boss 4, and in the radiused portion between segments 3' and 5 there is preferably formed an elongated aperture 8 that facilitates the bending.

In the embodiment illustrated in the figures boss 4 is formed on the flat segment 3 and hole 7 in the bent-over segment 5, but it is obvious that if boss 4 projects inwards then hole 7 is formed in segment 3'. Similarly, it is also clear that the above-mentioned arrangement could be reversed by forming hole 7 in segment 3, and boss 4 on segment 3' or 5 so that it projects inside seat 6.

The simple and reliable operation of the present collar device is readily understood on the basis of the figures and of the description above.

The half-collar provided with hole 2 is wall-mounted in a conventional way with a screw and an expansion plug, with total freedom of orientation and the greatest ease since a screwing tool or the like can be used.

Pipe T is then positioned in the concavity of the semi-circular profile 1 and partially locked therein by the simple manual operation of initial locking of the device. This initial locking is achieved by making the other half-collar without hole longitudinally slide so that the respective flat segments 3 of the two half-collars enter for a short length the corresponding seats 6 formed between segments 3' and 5, as shown in fig.8, so as to perform a coupling.

This partial restraint allows on one hand a certain mobility of pipe T thus permitting to adjust progressively the position thereof, and on the other hand assures, thanks to the friction between the two halves of the collar resulting from the design of the coupling elements, the overall staticity of the whole piping, in particular for the lengths of pipe installed vertically. The complete locking of the collar (fig.9) is carried out as quickly upon completion of the global structure of the piping, by completing with a vice the longitudinal sliding of the half-collar without hole so that bosses 4 engage the corresponding holes 7.

It should be noted that the collar of the present invention provides the mounting of pipes of any diameter and can be made in any kind of material. Moreover, the punch that makes hole 2 in profile 1 can, through a simple adaptation of the die, form on the inner surface of profile 1' a circumferential rib that allows to compensate for possible variations in the pipe diameter due to tolerances, so as to assure in any case a secure contact between collar and pipe.

It is clear that the above-described and illustrated embodiment of the collar device according to the invention is just an example susceptible of various modifications. In particular, number, shape and arrangement of the blocking elements 4 and 7 can be somewhat changed, as well as the exact contour of the shaped ends of the half-collars that act as coupling elements suitable to allow an initial manual locking of the collar.

Therefore, possible additions and/or modifications may be made to the device of the present invention, yet without departing from the scope of protection of the invention.

## Claims

1. Collar device for the wall mounting of pipes and the like, consisting of two half-collars with a semi-circular profile (1, 1'), of which a first profile (1) is centrally provided with a hole (2) flared outwards whereas a second profile (1') has no hole, **characterized in that** at the ends of said profiles (1, 1') there are provided coupling elements suitable to allow an initial manual locking of the device through longitudinal sliding so as to achieve a partial mounting of a pipe (T), said coupling elements being provided with means to block the device in the position of complete locking.

2. Device according to claim 1, **characterized in that** the coupling elements consist at a first end of the semi-circular profile (1, 1') of a first flat segment (3) and at the other end of a similar flat segment (3') that continues in a subsequent segment (5) bent 180° inward, so as to form between said segments (3', 5) a U-shaped seat (6) arranged in the same plane of the first flat segment (3) and suitable to receive the latter.

3. Device according to claim 1 or 2, **characterized in that** the device blocking means consist of at least one boss (4) suitable to engage a corresponding hole (7).

4. Device according to claim 2 and 3, **characterized in that** a boss (4) is centrally formed on the first flat segment (3) and a corresponding hole (7) is formed in the bent-over segment (5) or in the adjacent flat segment (3') depending on the direction in which said boss (4) projects.

5. Device according to claim 2 and 3, **characterized in that** a boss (4) is centrally formed on the bent-over segment (5) or in the adjacent flat segment (3') so as to project inside the U-shaped seat (6) and a corresponding hole (7) is formed in the first flat segment (3).

6. Device according to one or more of claims 2 to 5, **characterized in that** in the radiused portion between the segments (3', 5) that form the seat (6) there is formed an elongated aperture (8).

7. Device according to one or more of the preceding claims,
**characterized in that** on the inner surface of the profile (1') without hole there is formed a circumferential rib.
